# EUROPEAN PATENT SPECIFICATION

(11) **EP 0 825 011 B1**
(45) Date of publication and mention of the grant of the patent: **11.12.2002**
(21) Application number: 96306074.4
(22) Date of filing: 20.08.1996
(51) Int. Cl.: B29C 70/50, D21H 13/40, D21F 1/02

(54) **Apparatus for wet manufacturing fiber reinforced thermoplastic resin sheet**
Vorrichtung zur Herstellung von faserverstärkten thermoplastischen Harzplatten
Appareil pour la fabrication de plaques en résine thermoplastique renforcées par des fibres

(43) Date of publication of application: 25.02.1998
(73) Proprietor: Kawasaki Steel Corporation, Chuo-ku, Kobe-shi, Hyogo 651 (JP)
(72) Inventor: Yoshikawa, Fumiaki, c/o Kawasaki Steel Co., Chiyoda-ku, Tokyo 100 (JP); Hanatani, Seiji, c/o Kawasaki Steel Co., Chiyoda-ku, Tokyo 100 (JP); Uchida, Yuichi, c/o Kawasaki Steel Co., Chiba-shi, Chiba 260 (JP); Takehara, Tsuguo, c/o Kawasaki Steel Co., Kurashiki-shi, Okayama 712 (JP); Shiota, Isamu, c/o Kawasaki Steel Co., Chiyoda-ku, Tokyo 100 (JP)
(74) Representative: Overbury, Richard Douglas

(56) References cited:
- EP-A- 0 148 760
- WO-A-83/00173
- GB-A- 1 026 276
- GB-A- 1 105 690
- US-A- 3 357 879

## Description

### BACKGROUND OF THE INVENTION

### Field of the Invention

The present invention relates to an apparatus for manufacturing a fiber reinforced thermoplastic resin sheet. More particularly, the present invention relates to an apparatus for manufacturing a fiber reinforced thermoplastic resin sheet, which can uniformly distribute solid concentration without being affected by inertia forces, and can permit inhibition of variations of unit weight distribution of a web under the effect of the dynamic pressure of the raw material dispersing liquid and the resultant fluctuations.

### Description of the Related Art

Attempts have been made to impart high strength and a high toughness value to a thermoplastic resin while retaining processing advantages. Composite material technology has been applied, based on the addition to a resin of a fiber having a high modulus of elasticity. The resultant fiber reinforced thermoplastic composite materials have been employed as materials for various structural members required to have light weight, a high toughness value and a high strength value. These materials are usually heated to above the melting point of the thermoplastic resin, followed by addition of the matrix, and the resulting composite is then formed into a prescribed shape.

Among other composites, plate-shaped or sheet-shaped materials suitable for forming on a press or for forming large-sized parts are known as stampable sheets. Stampable sheets are widely used for automotive structural parts such as seat backs, rear packages and integrally formed automobile ceilings. They result in lighter weight and reduce cost. They often reduce the number of necessary parts and assembly processes. Composite technology is further expanding to include other parts than those mentioned above.

A so-called wet manufacturing method using paper-making technology is known as a typical manufacturing method for making a stampable sheet. This method comprises dispersing fiber chips and a thermoplastic resin in an aqueous solution (dispersing step), preparing a nonwoven fabric-like web by use of paper-making technology by applying the resultant dispersing liquid onto a mesh belt (web forming step), and solidifying the web obtained after applying heat and pressure (sheet making step), thereby manufacturing a stampable sheet. A continuous manufacturing method is disclosed in, for example, Japanese Unexamined Patent Publication No. 6-158227.

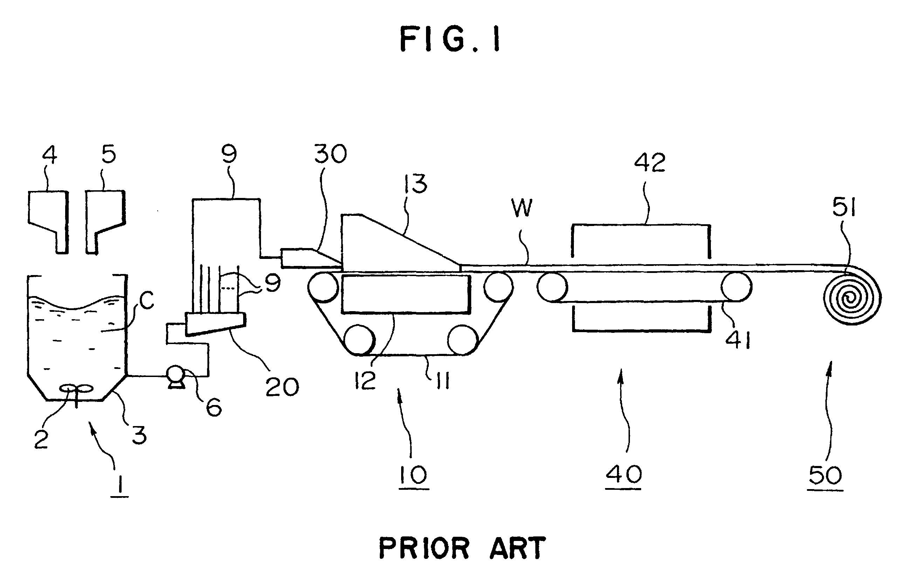

A web for a stampable sheet based on the paper-making method can be continuously manufactured as follows by the use of a manufacturing apparatus as shown in Fig. 1 of the drawings.

The apparatus shown in Fig. 1 broadly comprises a material preparing section 1, a web-forming section 10, a drying section 40, and a take-up section 50.

A dispersion tank 3 is provided with a stirrer 2 in the material preparing section 1, and a resin feeder 4 feeds stored thermoplastic resin while a reinforcing fiber feeder 5 feeds stored reinforcing fibers from above the dispersion tank 3.

The thermoplastic resin of the resin feeder 4 and the reinforcing fiber of the reinforcing fiber feeder 5 are charged at a prescribed ratio into the dispersion tank 3, which is filled with an aqueous solution containing a surfactant or a viscosity enhancing agent and stirred to form a dispersing liquid C serving as a raw material liquid. The thus prepared dispersing liquid C is sucked out of tank 3 by a metering pump 6, and is distributed by a manifold 20 into a plurality of branch pipes 9, and then conducted to the web-making section 10 via inlet 30. (Fig. 1 shows only one branch pipe 9 extending to inlet 30 for ease of understanding.)

The web-forming section 10 includes at least the following components: a continuously moving endless mesh belt 11, a suction box 12 arranged in contact with the back thereof, and a headbox 13 for storing the dispersing liquid C sent from the material preparing section 1 and supplying the same onto the mesh belt 11. The dispersing liquid C is sent through the inlet 30 to the headbox. The mesh openings of the mesh belt 11 are smaller than the diameter of the reinforcing fibers and the thermoplastic resin. The dispersing liquid C is sucked by the suction box 12 under reduced pressure, and the reinforcing fibers and the thermoplastic resin are converted into a sheet shape (filtered) onto the mesh belt having mesh openings smaller than the particle size of the thermoplastic resin. The mixture in the form of a nonwoven fabric of the reinforcing fibers and the thermoplastic resin is thus made into a sheet hereinafter referred to as a web. The web W, being in a wet state at this point, is passed through a drying section 40.

In the present invention, the inlet and the headbox are arranged very close to each other and they constitute a "distributor".

The drying section 40 has a belt conveyor 41 and a drying chamber 42 connected together downstream of the mesh belt 11, and continuously dries the web W. During the drying process, the resin is melted by removing moisture and changing the temperature of the resin to at least the melting point of the thermoplastic resin to strengthen intertwinement of the reinforcing fiber. The resultant dried web has a high fracture resistance and has excellent form stability, and is rolled up on a take-up roll 51 of a take-up section 50.

It is possible, if desired, to impregnate fibers with the thermoplastic resin by cutting and then heat-pressing the web. The product in this state is called a "consolidated sheet." This consolidated sheet is generally used as a forming material.

The quality and properties of a stampable sheet based on the paper-making method are mostly determined during the web-forming step. Also, keeping a uniform unit weight distribution in the web is particularly important in order to reduce any differences in thickness or in the content of the reinforcing fiber and to reduce fluctuations in properties.

Patterns of unit weight distribution are broadly classified into those occurring in the longitudinal direction of the manufacturing line (hereinafter sometimes referred to as the "line direction") and those occurring in the width direction. The former are often attributable to pulsations in the raw material supply system typically represented by a pump, and techniques to prevent this are known. In order to avoid a nonuniform unit weight distribution in the width direction, it is necessary to uniformly expand the raw material (liquid) which is sent usually through a single pipe. This problem could not, however, be easily solved in the wet manufacturing method for stampable sheets as described later.

Furthermore, the unit weight distribution in the width direction exerts an important effect also on the orientation of the reinforcing fiber for the following reason. When a change occurs in the unit weight distribution in the width direction, the raw material dispersing liquid supplied to the headbox naturally flows into that portion having a smaller unit weight value and a smaller suction resistance, and this causes the production of a channelling effect. Because fibers are oriented along the direction of flow, channelling takes place and leads to local abnormal orientation of the fibers, and eventually results in cambering, arching, curvature or the like of the stampable sheet.

In other words, achievement of a uniform unit weight distribution in the width direction is a prerequisite for obtaining sheets having uniform properties.

A uniform unit weight distribution in the width direction can be achieved by using a uniform chemical composition of solids (reinforcing fiber and thermoplastic resin) in the dispersing liquid and supplying the dispersing liquid onto the sheet-making surface with a flow rate that is uniform in the width direction. The manifold and the headbox inlet serve this function.

Problems involved with the manifold and the inlet in currently used wet-type apparatus and solutions to those problems according to the present invention will be described below.

### ◆ Conventional manifold:

The function of the manifold 20 (as shown in Fig. 1) is to supply the dispersing liquid at a flow rate and a solid concentration that is essentially uniform in the width direction of the inlet 30. That is, the manifold 20 serves to widen the flow of the dispersing liquid directed towards the headbox 13 from the dispersing tank 3 through the piping, in the width direction.

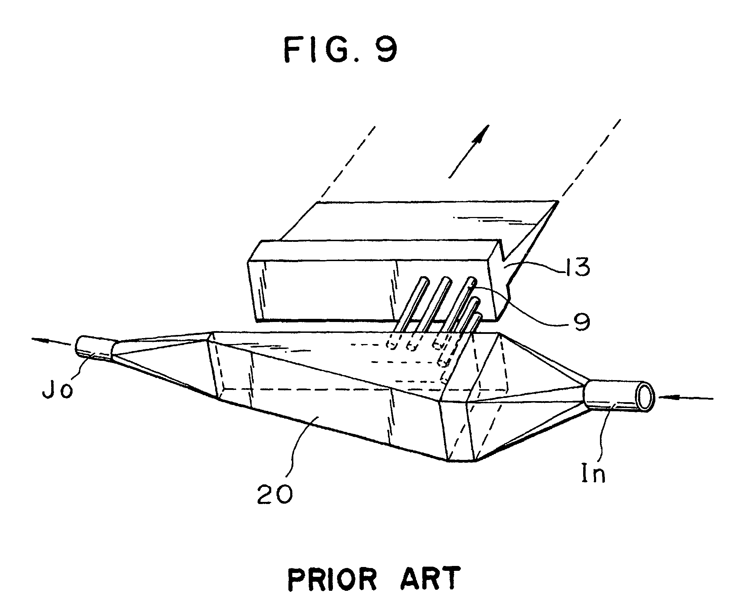

The shapes of various manifolds have conventionally been studied from various points of view. In the paper industry, which faces its own specific problems, it is the general practice to use a taper-type manifold of which the cross-sectional area gradually decreases as disclosed in the Journal of the Japan Society of Paper/Pulp technology (published on January 1, 1993), Vol. 47, No. 1, p. 102. An outline of this manifold is illustrated in Fig. 9. According to the literature, the flow rate distribution in the width direction of the headbox 13 is very uniform. Solids are almost exclusively pulp (wood fiber) and there is no problem in the uniform distribution of its concentration.

The foregoing taper-type manifold has been used with very different technology in conventional wet manufacturing apparatus for fiber reinforced thermoplastic resin sheets. However, when using a taper-type manifold for making of stampable sheet, the concentration distribution of solids was not necessarily accomplished uniformly as was the case in pulp concentration.

The reinforcing fibers and the thermoplastic resin comprising the stampable sheet usually have different values of specific gravity and geometric shapes. Typical reinforcing fibers include glass fiber, carbon fiber, and stainless steel fiber. In the case of glass fiber, for example, those having a specific gravity of about 2.54 and an aspect ratio (fiber length/fiber diameter) within a range of from about 1 x 10⁶ to 5 x 10⁶ are used.

Thermoplastic resins serving as the matrix have, on the other hand, a specific gravity within a range of from about 0.9 to 1.5. For the purpose of reducing the manufacturing cost, it is the usual practice to use a granular shape having a size of about 1 mm, the aspect ratio being about 2 as a maximum.

As shown in Fig. 9, the taper-type manifold turns the direction of the dispersing liquid flowing into it through the inlet port at a right angle, and sends the liquid through the branch pipes 9 to the headbox 13. At this point, the solids in the liquid are under the effect of an inertia force depending upon the shape thereof (aspect ratio). More specifically, because the thermoplastic resin has an aspect ratio that is far smaller than that of the reinforcing fiber (resulting in a larger inertia), the turning affect near the discharge exit to the branch pipes 9 becomes insufficient and the resin tends to be thrown towards the circulation flow exit Jo. As a result, the thermoplastic resin segregates near the tip of the taper-type manifold. In contrast the reinforcing fibers that have a large aspect ratio (resulting in a smaller inertia) easily follow the flow of the dispersing liquid causing no segregation. Accordingly, non-uniform concentrations of solids occur in the interior of the manifold because of the inertia differences.

In the conventional wet manufacturing apparatus for stampable sheets, this non-uniform concentration causes a non-uniform unit weight distribution in the width direction of the web, and this in turn causes non-uniformity of mechanical properties such as bending strength and bending elastic modulus of the product sheet, and further causes variations of quality such as non-uniform thicknesses.

### ◆ Conventional inlet:

As shown in Fig. 1, the dispersing liquid distributed at the manifold 20 into the branch pipes 9 is directed to the inlet 30, where the flows meet, and is then sent to the mesh belt 11 as a two-dimensional flow. In other words, the inlet 30 may be considered to be an apparatus which converts the dispersing liquid sent in the form of a plurality of "lines" from the manifold 20 into a "plane" flow and supplies it to the mesh belt 11.

In the conventional wet manufacturing apparatus for stampable sheets, it is common practice to use a larger-volume inlet 30 to cause the dispersing liquid C to display fully its mixing and straightening effects, with a view to making a web having a uniform unit weight distribution.

However, with an inappropriate increase in volume at the inlet 30, it is impossible to control fluctuations in the flow leaving the exit, and the problem of promoting fluctuation is posed. The fluctuation as referred to herein is a phenomenon in which the flow does not run straight from the exit in the line direction, but horizontally deviates right and left. Occurrence of this fluctuation is attributable mainly to variations of dynamic pressure and flow rate of the dispersing liquid C.

Another problem is one that is intrinsic in the wet manufacturing process. In a wet manufacturing method in which the reinforcing fibers and the thermoplastic resin are transported by a foamed liquid, and wherein there exists the presence of a portion at which the flow velocity decreases, the liquid often separates into a portion containing a large foam content (a high air content) and into another portion containing the aqueous solution without substantial foam. This foam reduces the solid transporting capability of the dispersing liquid and makes it very difficult to achieve a uniform concentration and a uniform unit weight distribution. This decrease in flow velocity of the dispersing liquid tends to occur particularly when the inlet has a structure in which stagnation of the dispersing liquid occurs.

In the wet manufacturing method, therefore, a very difficult task is presented that requires inhibiting the large dynamic pressure of the dispersing liquid and straightening the flow, all without reduction of flow velocity.

GB-A-1105690 describes an apparatus for delivering pulp to a machine for making paper, cardboard or the like. The pulp is fed into a container via an inlet pipe and leaves the container via a plurality of outlets located at the base of the container. Tubes connected to these outlets feed the pulp to the inlet of the headbox of the paper making machine.

### SUMMARY OF THE INVENTION

It is one object of the present invention to provide an apparatus for wet manufacturing a fiber reinforced thermoplastic resin sheet having a novel manifold capable of uniformly distributing the solid concentrations without being affected by inertia forces caused by differences in shapes between solids.

Another object of the present invention is to provide an apparatus for wet manufacturing a fiber reinforced resin sheet having a novel buffer inlet for the reservoir headbox capable of permitting inhibition of variations of unit weight distribution under the effect of the dynamic pressure of the raw material dispersing liquid and the resultant fluctuations.

According to the present invention there is provided an apparatus for manufacturing a fiber reinforced thermoplastic resin sheet comprising: (a) a dispersion supply container comprising container means for containing a dispersing liquid comprising a reinforcing fiber and a resin;(b) a manifold connected to said dispersion supply container, said manifold including a shell having a substantially central axis wherein said shell is substantially symmetrically shaped around said axis and having; (c) a dispersing liquid inlet and a plurality of dispersing liquid outlets , which outlets are symmetrically positioned about said shell axis, wherein said manifold is such that the dispersing liquid introduced into said manifold through said inlet is substantially spirally and/or vertically circulated within said shell prior to exiting through said outlets; and (d) a distributor connected to said manifold to receive dispersing liquid from said outlets to distribute said dispersing liquid to make a fiber reinforced thermoplastic resin sheet, characterised in that said outlets are located in the upper portion of the manifold.

### BRIEF DESCRIPTION OF THE DRAWINGS

For a better understanding of the invention and to show how the same may be carried into effect, reference will now be made, by way of example, to the accompanying drawings, in which:-
Fig. 1 is a schematic view of a conventional apparatus for manufacturing a fiber reinforced thermoplastic resin sheet;
Fig. 2 is a perspective view illustrating the flow of the dispersing liquid in the interior of the manifold of one form of the apparatus of the present invention;
Fig. 3A is a sectional view and Fig. 3B is a plan view of one embodiment of the manifold of Fig. 2;
Fig. 4A is a sectional view and Fig. 4B is a plan view of another embodiment of the manifold of Fig. 2;
Fig. 5 is a sectional view of a headbox inlet of one embodiment of an apparatus of the present invention;
Fig. 6 is a sectional view of a headbox inlet of another embodiment of the present invention;
Fig. 7A is a sectional view and Fig. 7B is a plan view of a headbox inlet of another embodiment of an apparatus of the present invention;
Fig. 7C is a plan view of a headbox inlet of a further embodiment of an apparatus of the present invention;
Fig. 8A is a sectional view of a headbox of one embodiment of an apparatus of the present invention;
Fig. 8B is a sectional view of a headbox of another embodiment of an apparatus of the present invention;
Fig. 8C is a back view of the headbox shown in Fig. 8B;
Fig. 9 is a perspective view illustrating a conventional taper-type manifold;
Figs. 10A and 10B are partial plan views of headbox inlets illustrating a portion near the slit-shaped discharge exits of the inlets wherein Fig. 10A shows a portion including a partition and Fig. 10B shows a portion not containing a partition;
Figs. 11A and 11B illustrate another conventional taper-type manifold;
Fig. 12 is a graph illustrating the results of a PP concentration distribution performance test of the taper-type manifold shown in Fig. 11; and
Fig. 13 is a sectional view of an embodiment of a conventional headbox inlet.

### DESCRIPTION OF PREFERRED EMBODIMENTS

It will be appreciated that the following description is intended to refer to the specific embodiments of the invention selected for illustration in the drawings and is not intended to define or limit the invention, other than in the appended claims.

With a taper-type manifold, it is difficult to distribute granular solids having a large inertia force uniformly across the width direction of the headbox.

### ◆ Manifold of the present invention

In order to overcome this problem, we have found it advantageous to provide a manifold structure which permits avoidance of the effect of inertia acting on the solids by providing a substantially constant distance between the manifold inlet and the manifold outlets. On the basis of these findings, we have found that a manifold having the shape of a rotor and preferably having a substantially vertical rotation axis (hereinafter referred to as a "vertical axis rotor") is effective for uniform distribution of solids and, particularly of granular solids having a large inertia force.

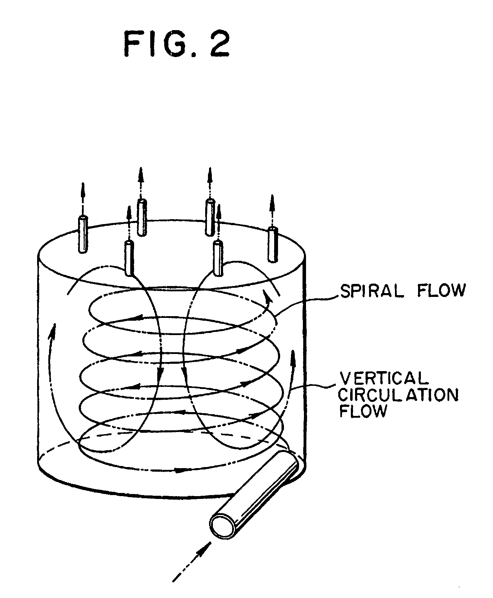

The manifold of the present invention preferably has the shape of a vertical axis rotor and is provided with distribution flow exits (herein sometimes referred to as "dispersing liquid outlets") of substantially equal diameter at the same height. The expression "vertical axis rotor" as herein used means a solid body having an axisymmetrical shell with a substantially vertical axis as the center. The most simple vertical axis rotor is a cylinder having all the sides forming axisymmetry planes, with planar upper and lower faces. Various other shapes are possible. For example, the upper and lower faces may be conical or hemispherical faces, not necessarily planar. By adopting a vertical axis rotor shape, a rotary (spiral) flow as schematically shown in Fig. 2 or a radial vertical circulation flow is easily produced. In this way, mainly a centrifugal force depending upon the distance from the center axis of the vertical axis rotor (hereinafter simply referred to as the "center axis") acts on the reinforcing fibers and the thermoplastic resin in the dispersing liquid. It is thus possible to prevent the disadvantageous effect of inertia force as in a conventional taper-type manifold.

Furthermore, the solids in the dispersing liquid come up along the axisymmetrical curved surface under the effect of the foregoing flow and reach the distribution flow exits at the same height. Irrespective of the distribution flow exits, therefore, the loci of all the flows from the inlet for the dispersing liquid to the exits become substantially identical. The flows of the dispersing liquid are, therefore, uniformly discharged with the same solid concentration from all the distribution flow exits.

The ratio of the height to diameter of the manifold having the foregoing substantially vertical axis rotor shape is variable depending on the properties of the dispersing liquid. For example, this ratio should preferably be within a range of from about 0.3 to 3 for a simple cylinder.

The manifold may have its inlet port at a lower portion thereof for introducing the dispersing liquid in a direction tangential to the axisymmetry curved face. It is thus possible to produce a rotating (spiral) flow and a vertical circulation flow as schematically shown in Fig. 2. For the purpose of efficiently producing these flows, it is effective to make the lower surface conical or hemispherical. With a view to causing the rotating flow to flow throughout the entire interior of the manifold, the distribution flow exits should preferably be as far as possible from the bottom of the manifold. To ensure a sufficient moving distance between the dispersing liquid inlet and the distribution flow exits, the manifold should preferably have a length which is at least five times the inside diameter of the supply pipe feeding the raw material dispersing liquid to the inlet.

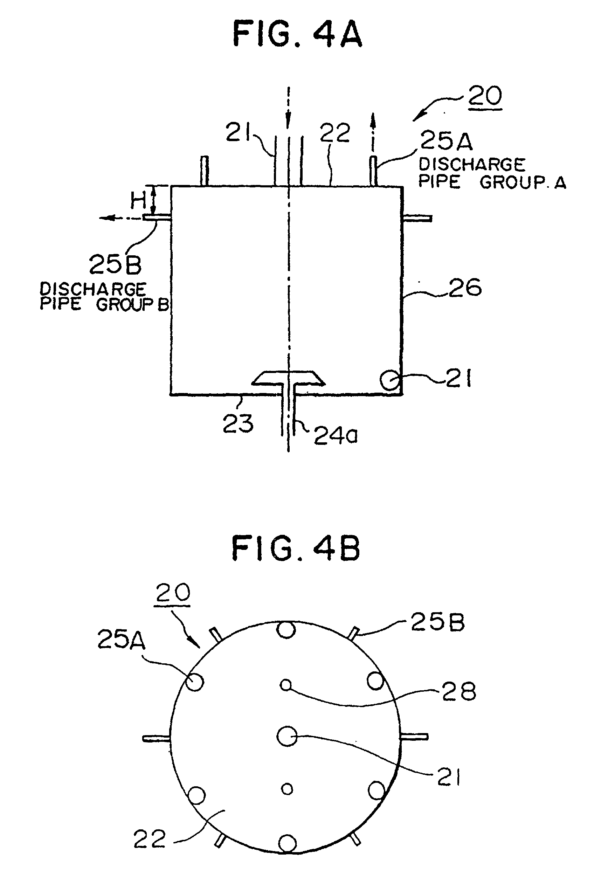

The inlet of the manifold may, on the other hand, be located so as to introduce the dispersing liquid from substantially vertically above and along the center axis. As shown in Fig. 4A, the dispersing liquid entering through the inlet 21 comes down along the center axis, then comes up under the guidance of the axisymmetrical curved surface 26 of the inner shell, and is directed to the distribution flow exits 25. Consequently, as substantially vertical circulation flow is easily formed in the manifold, the locus of the reinforcing fibers and the thermoplastic resin from the inlet 21 is substantially the same for any of the distribution flow exits. This means that the dispersing liquid has a uniform solid concentration as it flows out of the distribution flow exits.

The foregoing manifold may be provided with a horizontally rotating stirrer. The stirring shaft of the stirrer should substantially align with the center axis of the manifold. Figs. 4A and 4B illustrate an example. Under the effect of this stirring, a rotating flow and a vertical circulation flow similar to those schematically shown in Fig. 2 can be produced, thus achieving uniform distribution of solids in the dispersing liquid. It is preferable to use any of a variety of stirring blades which have the function of pushing the liquid flow in the radial direction. Turbine-type, propeller-type and paddle-type blades are possible.

To cause the rotating flow to reach every corner of the manifold, the stirring blades should preferably be as close as possible to the bottom of the manifold. Installation of the stirrer has a further effect of inhibiting secondary cohesion of the reinforcing fibers. The diameter ratio of the manifold to the stirring blades is determined so as to produce a rotating flow effective for uniform distribution of solids. In the case of the simplest cylinder, this ratio is preferably within a range of from about 1.5 to 5.

The manifold may be provided with distribution flow exits at equal intervals on a substantially concentric circle around the center axis which constitutes the center of the circle. By using this arrangement, the flow distances of the solids flowing in the rotating flow to the individual distribution flow exits on the concentric circle become substantially equal, and the concentration of the discharged liquid becomes very uniform.

The liquid may be a foamed dispersing liquid. Although it is possible to employ a dispersing liquid containing no foam, the use of a foamed dispersing liquid inhibits separation since solids having considerable differences in shape or specific gravity can be simultaneously caught by the surfaces of foams, thus permitting maintenance of a uniform mixed condition during liquid transportation.

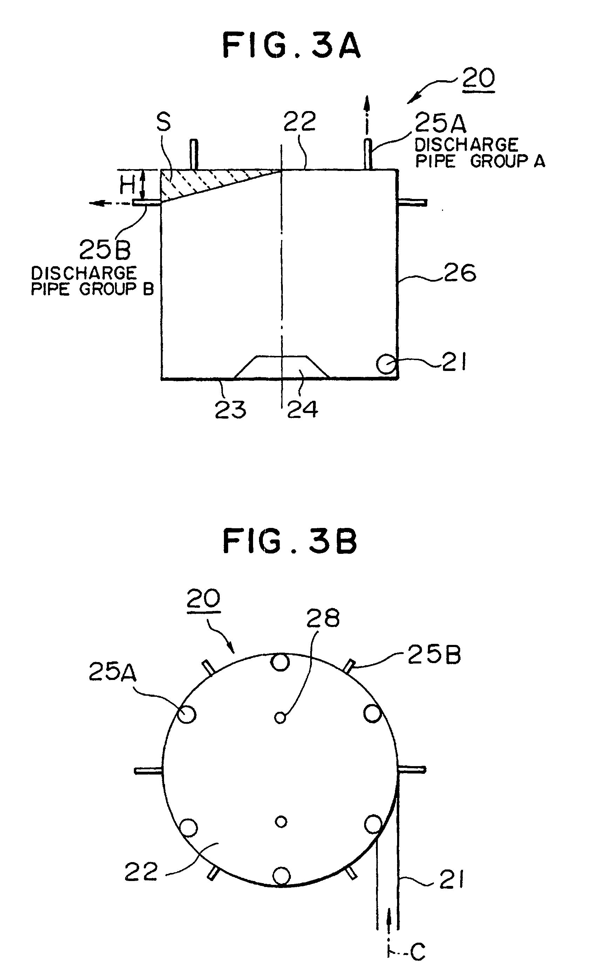

When using a foamed dispersing liquid, however, the problem of separation of the foam from water is separately posed. We have found that the dispersing liquid in the manifold was sometimes divided into a portion having the same chemical composition as the incoming dispersing liquid and another portion (bubble retaining region) S in which apparently many bubbles segregated as separate portions, as shown in Fig. 3A. While the reinforcing fibers can be present in this bubble retaining region S, there is little or no granular thermoplastic resin present. A mixture of the dispersing liquid and the bubble retaining region flows out from each distribution flow exit. From an exit with a high mixing ratio of the bubble retaining region, a foamed dispersing liquid having a high concentration of the reinforcing fiber flows out. This means that occurrence of a bubble retaining region S causes non-uniform distribution of the solids.

Occurrence of such a bubble retaining region can be effectively prevented by first keeping the dispersing liquid in a flow condition throughout all regions in the manifold. For this purpose, it is important to control appropriate dispersing liquid flow conditions and appropriate operating conditions of the horizontally rotating stirrer, taking account of the size of the manifold. Considering the fact that the bubble retaining region is segregated in the upper layer of the dispersing liquid, it is also effective to prevent growth of the bubble retaining region by arranging for the distribution flow exits for the dispersing liquid to be in the upper portion of the manifold as much as possible.

With a view to eliminating the foregoing bubble retaining region, the manifold may be arranged vertically upward with the distribution flow exits on the upper surface of the manifold. This ensures vertically upward discharge of the floating bubbles together with the dispersing liquid, and no bubbles are retained in the manifold.

### ◆ The distributor inlet

In the buffer-type inlet preferred in the present invention, the most important point for achieving a uniform flow rate of the dispersing liquid over the entire width of the mesh belt and discharging it onto the mesh belt is to reduce the dynamic pressure of the dispersing liquid which is branched at the manifold into a plurality of flows and sharply supplied to the inlet.

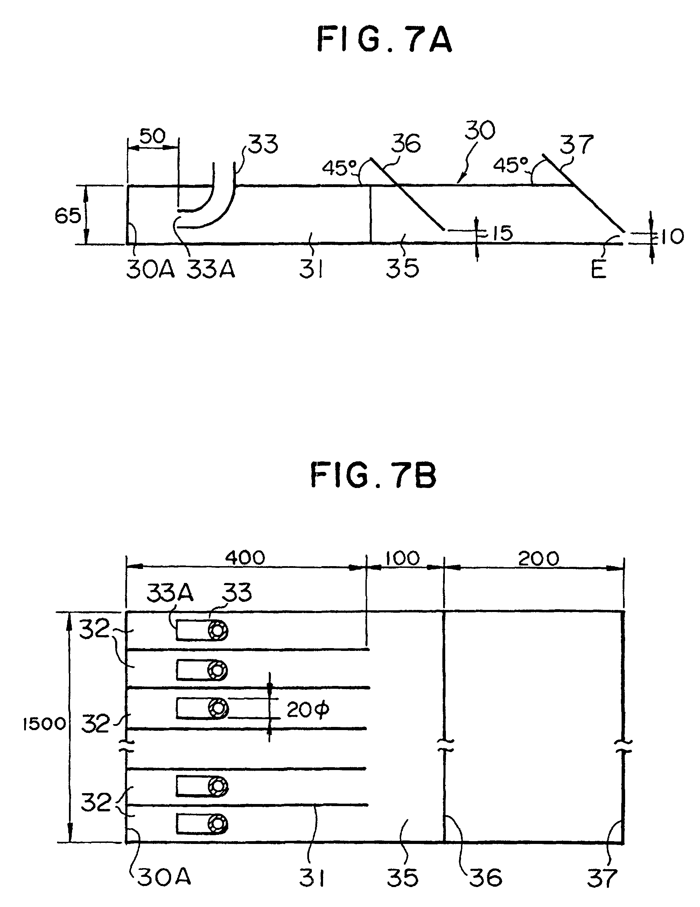

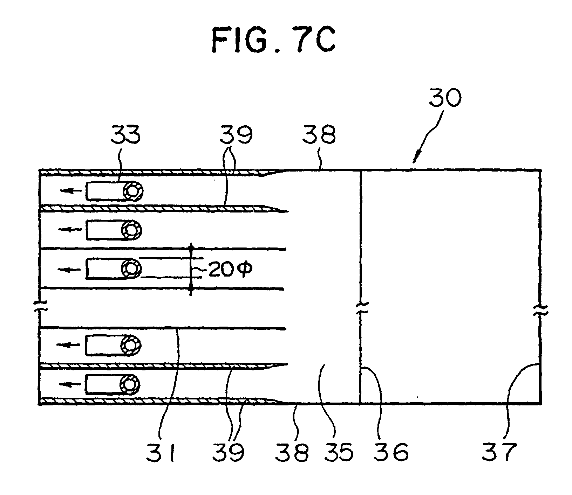

In the buffer-type inlet, reduction of the dynamic pressure of the dispersing liquid is achieved by causing the dispersing liquid supplied from the manifold to the inlet to collide at least once with a dispersing liquid deflecting or disturbing face in the vicinity of the dispersing liquid inlet ports thereby changing the flow direction. In the case of a box-shaped inlet as shown in Figs. 7A, 7B and 7C, for example, the dispersing liquid deflecting face may be arranged on any of the front, upper, lower and rear inner walls. The dynamic pressure reducing effect is more remarkable in the order shown above. By collision with the disturbing face, the dynamic pressure of the flow ejected from the branched pipes 9 is dampened by converting it into energy of disturbance.

In order to straighten the flow of the dispersing liquid of which the dynamic pressure has been converted into energy of disturbance, i.e., into a wavy rolling in the inlet, the flow is caused to pass through a slit-shaped dispersing liquid discharge exit E which is long in the width direction and narrow in the height direction. The size of the slit-shaped discharge exit i.e., the degree of the opening, may be determined taking account the supply flow rate and the flow velocity of the dispersing liquid to the inlet.

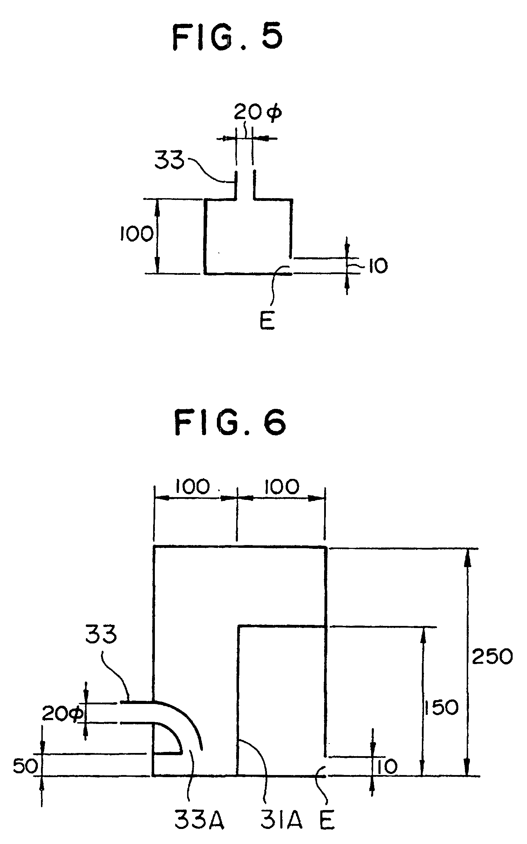

In the inlets shown in Figs. 6, 7A, 7B and 7C, the dispersing liquid inlet ports are arranged with their openings in a direction opposite to the line direction, and this is effective. It is possible to efficiently inhibit the dynamic pressure of the ejected flow by causing the flow ejected from the branched pipes 9 to collide with the rear wall surface, such as wall surface 30A in Figs. 7A and 7B, to change the flow direction by about 180°.

In the inlet as described above, the buffer effect on the deflecting face can be improved by reducing the amount of fluctuation of the flow (horizontal deviation of the flow). For this purpose, the flows of the dispersing liquid flowing through the branched pipes 9 into the inlet are not allowed to recombine immediately, but are introduced into small channels formed by equally dividing the inlet by means of partitions 31. More specifically, as shown in Figs. 7A, 7B and 7C for example, the inlet is divided by partitions in the width direction into a plurality of sections, and the dispersing liquid is introduced into each of the thus formed small channels. This limits the amount of flow disturbance and fluctuation to the sizes of the small channels, thereby facilitating control. Each channel is completely independent of the others to prevent mixture of the individual flows.

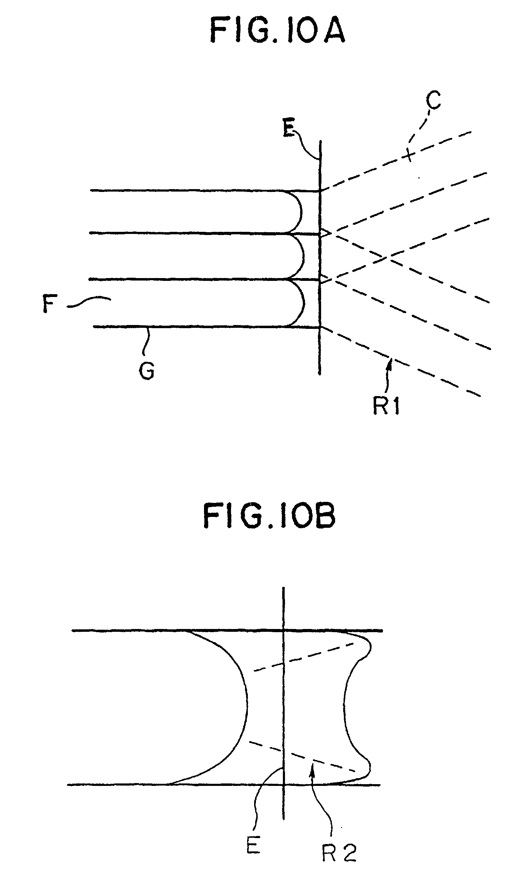

In the inlet, furthermore, for the purpose of sending a flat flow on the flow front onto the mesh belt, the flows of the dispersing liquid are caused to meet each other downstream of each section (in the present invention, the direction of the incoming dispersing liquid is defined as the upstream, and that of the leaving liquid, as the downstream) and before the slit-shaped discharge exit (hereinafter sometimes referred to as the "upstream side"). If the dispersing liquid flows, having passed through the sections, are not allowed to recombine but as shown in Fig. 10A, are directly passed through the slit-shaped exit E, the thickness of the partitions between the individual sections F tends to form a diagonal flow R1 on the mesh belt, thus preventing the achievement of a uniform unit weight distribution.

Under some conditions the flow velocity may slightly decrease at the ends in the width direction as a result of the resistance caused by wall surfaces, particularly the side wall surfaces, prior to reaching the dispersing flow discharge exit. Therefore, if the flow velocity of the dispersing liquid supplied from the manifold is constant over the entire width, the flow at the center portion not affected by the resistance of the side wall surface may exceed the others, and as a result, a parabolic or trapezoidal flow velocity distribution occurs before the dispersing liquid reaches the discharge exit. When this flow suffers from pressure loss under the drawing effect of the slit-shaped dispersing liquid discharge exit E, as shown in Fig. 10B, a diagonal flow R2 directed from the center portion toward the ends occurs to compensate for the non-uniformity of flow velocity in the width direction. This diagonal flow R2 may sometimes cause a non-uniform unit weight distribution or an abnormal fiber orientation at the ends in the web width direction.

We have found that this problem can be overcome by increasing the flow velocity of the dispersing liquid flowing in the inlet at the ends in the width direction. In the foregoing inlet, it is effective for the flow velocity of the dispersing liquid flowing through the outermost sections of the inlet to be higher than that in the inner section, thereby compensating for the decrease in flow velocity near the side walls, and to form a flat flow velocity distribution even after passing through the slit-shaped discharge exit.

More specifically, in the inlet as described above, as shown in Fig. 7C for example, the outermost section has a smaller sectional area than the other sections. The extent of reduction of the sectional area of the outermost section is determined having regard to the supply flow rate of the dispersing liquid and the length of the flow combining section. According to this method, there is no need to control the incoming flow rate of the dispersing liquid and this ensures that the distribution of the flow rate at the manifold or the ratio of reinforcing fibers and thermoplastic resin is not affected, thus making it possible to obtain a uniform unit weight distribution.

The channel width can be reduced by the insertion of a width reducing plate or the formation of thick channel walls. In order to cope with changes in the sheet-making conditions as described above, it suffices to provide width reducing plates of various thicknesses and select the plates in response to the conditions. To reduce the effect of side wall resistance on the dispersing liquid, use of a material having low frictional resistance (Teflon®, for example) is effective.

The foregoing slit-shaped discharge exit can be formed by various means. As shown in Fig. 7A, use of an angled or sliced plate having an adjustable opening gives a high operability and a high general applicability. The sliced plate 37 should preferably be installed vertically or with an inclination downward from above with respect to the dispersing liquid discharge exit. Installation of the sliced plate with an upward inclination towards the dispersing liquid discharge exit is not usually recommended since it may lead to stagnation of the dispersing liquid.

In the foregoing inlet, furthermore, as shown in Fig. 7A, the rectifying effect is made more certain by installing a plurality of sliced plates at intervals in the flow direction of the dispersing liquid.

### The headbox

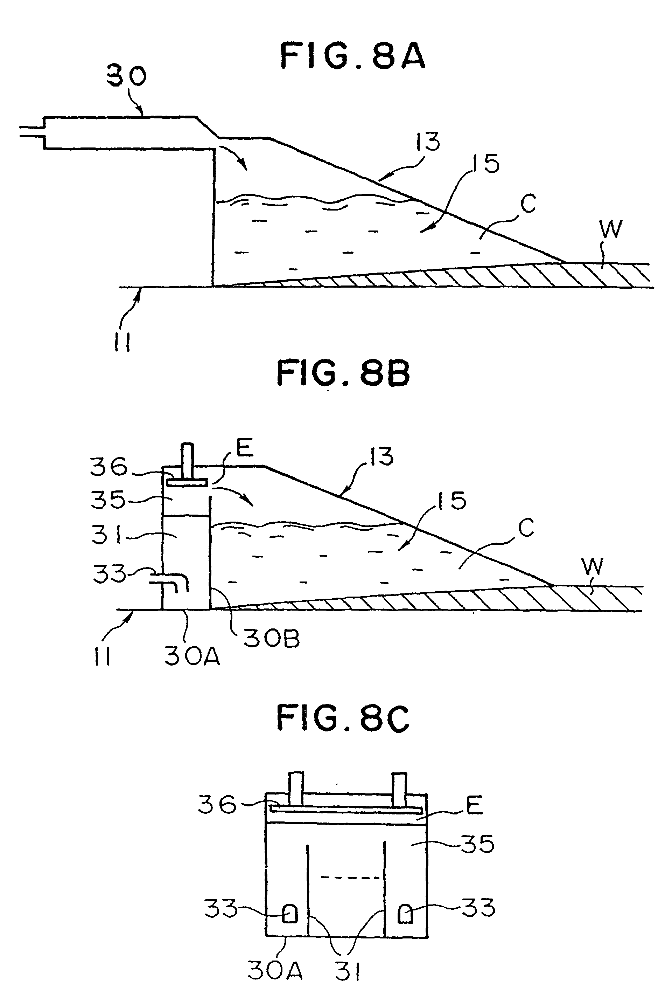

We have discovered a comprehensive and effective method for achieving, in the headbox 13, a uniform unit weight distribution in the width direction of the web by supplying a dispersing liquid which is uniform in solid concentration and flow rate onto the mesh belt 11. For this purpose, an effective method is to prevent any significant dynamic pressure of the dispersing liquid C and resultant rolling from reaching the mesh belt. This can be done by a structure as shown in Figs. 8A, 8B and 8C. As shown, the dispersing liquid C sent from the inlet 30 to the headbox 13 is caused to be held on the mesh belt 11. This makes it possible to conduct web forming corresponding to the process known as the batch process even in a continuous manufacturing practice, and inhibits the occurrence of non-uniform unit weight distribution.

Separation of reinforcing fibers from the thermoplastic resin can be prevented by sucking the dispersing liquid C which accumulates on the mesh belt 11 by means of the suction box 12 (see Fig. 1) at a rate higher than the ultimate sedimentation rate of the thermoplastic resin particles in the dispersing liquid. Separation of foam from water when using a foamed dispersing liquid can also be prevented in a similar manner. The holding depth of the dispersing liquid is determined by taking account of the viscosity of the dispersing liquid, the solid concentration and the supply flow rate thereof, the liquid sucking flow rate of the suction box 12, the running speed and inclination angle of the mesh belt 11, and the bottom area of the holding section 15.

### EXAMPLES

The present invention will now be described below by means of examples with reference to the drawings. The whole system of the wet-type manufacturing apparatus of a fiber reinforced thermoplastic resin sheet may have portions as shown in Fig. 1 except for those described in the following examples.

### [Apparatus 1]

A manifold having the shape of a vertical axis rotor was used in the experiments and is illustrated in Fig. 3: Fig. 3A is a side view and Fig. 3B is a top view. The manifold was cylindrical, with an inside diameter of 410 mm and a height of 300 mm. An inlet port 21 (inside diameter: 50 mm) for supplying the raw material dispersing liquid to the manifold 20 in a tangential direction was installed on the bottom side of the manifold 20, and its direction was aligned with the tangential direction of the cylindrical manifold. A conical guide section 24 projecting into the manifold was provided on the lower surface 23 to assist formation of a vertical circulation flow and a rotating flow as shown by the lines and arrows appearing in Fig. 2. Six distribution flow exits 25A of inside diameter: 20 mm (discharge pipe group A) were provided on the upper surface 22, and six distribution flow exits 25B of inside diameter: 20 mm (discharge pipe group B) were provided on the cylinder side 26 at a distance H = 65 mm from the upper surface, all at equal intervals, making a total of 12 exits. The six distribution flow exits 25 of the discharge pipe group A were installed at equal intervals on a concentric circle with a diameter of 390 mm on the upper surface 22 of the manifold 20 having an inside diameter of 410 mm. Two degassing ports 28 (Fig. 3B) were provided on the manifold upper surface 22 to confirm the presence of a foam retaining region.

Another manifold having the shape of a vertical axis rotor was used in the experiments and is illustrated in Fig. 4: Fig. 4A is a side view, and Fig. 4B is a top plan view. The manifold was cylindrical, with an inside diameter of 410 mm and a height of 400 mm. An inlet port 21 (inside diameter: 50 mm) for supplying the raw material dispersing liquid to the manifold 20 was installed at the center of the circular plane of the upper surface 22 of the manifold. The lower surface 23 was provided with a six-blade turbine-type horizontal rotating stirrer 24 a having an outside diameter of 250 mm. Details of the installation of the distributed flow exits 25A and 25B, and degassing ports 28 are the same as those for the manifold shown in Fig. 3.

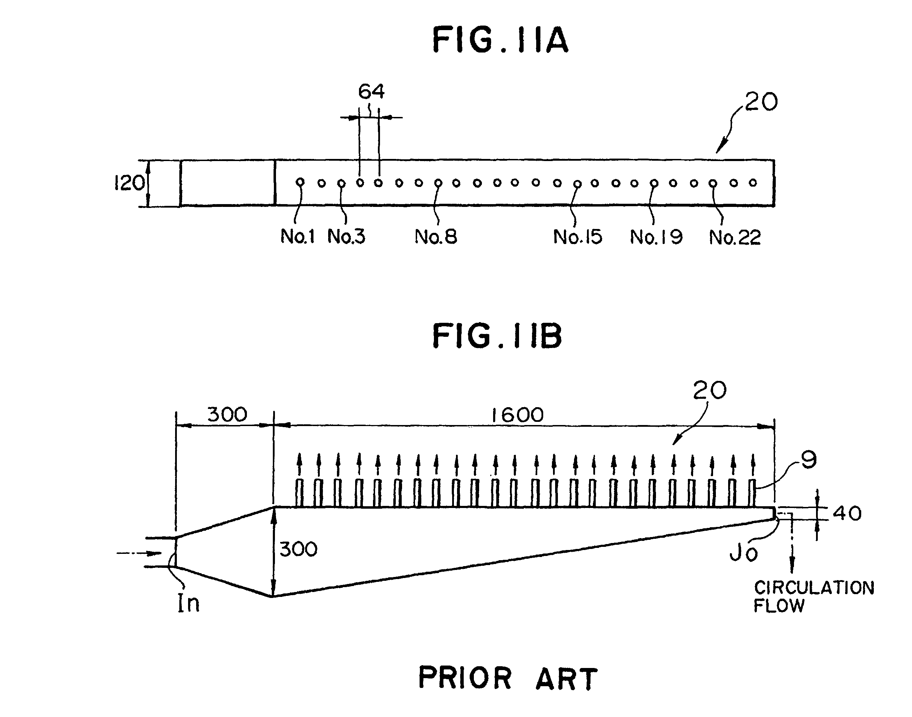

A taper-type manifold as used in a conventional wet-type manufacturing apparatus was also used in the experiments and is illustrated in Fig. 11: Fig. 11A is a top plan view and Fig. 11B is a side view. This manifold was provided with 24 branched pipes (hereinafter referred to as the "distribution flow exits") 9 arranged at equal intervals on the side surface of the taper portion. With a flow rate of incoming dispersing liquid to the manifold of 1,640 L/min, and a circulation flow rate of 200 L/min of flowing in and out of the manifold, the flow rate per one of the distribution flow exits 9 was set at 60 L/min as in the case of the foregoing manifolds of the vertical axis rotor shape. The dispersing liquid was sampled from six distributed flow exits 9 i.e. Nos. 1, 3, 8, 15, 19 and 22. No. 1 distributed flow exit was spaced from No. 22 exit by a distance of 1,340 mm.

Using these manifolds, the following comparative tests of concentration distribution performance of the dispersing liquid were carried out.

### [Example 1-1]

A raw material dispersing liquid C was prepared by adding glass fibers (GF) having a diameter of 11 µm and a length of 13 mm and polypropylene (PP) particles having an average particle size of 0.9 mm to a foamed aqueous solution. Both GF and PP had a weight concentration in the dispersing liquid of 0.35%. This dispersing liquid was supplied at a flow rate of 360 L/min via inlet 21 to the manifold 20 having the shape of a vertical axis rotor as shown in Fig. 3. The average flow rate, as determined by dividing the supply flow rate by the cross-sectional area of the inlet 21 serving as the supply pipe was 3 m/s. Each of the distribution flow exits 25 had a flow rate of 60 L/min. Immediately after starting the supply of the dispersing liquid to the manifold 20, the system was evacuated through the degassing ports 28, and upon the lapse of 5 minutes thereafter, the dispersing liquid was sampled simultaneously from each of the distribution flow exits 25A (discharge pipe group A) or 25B (discharge pipe group B). Immediately after sampling, the degassing ports 28 were released to confirm occurrence of a foam retaining region in the upper part of the manifold. This operation was repeated twice for each of the discharge pipe groups A and B. The dispersing liquid flowed out immediately after release, and there was no sign that a bubble retaining region had occurred.

Glass fiber and PP particles were extracted through suction and filtration of the dispersing liquid sampled from each of the distribution flow exits, dried at 100°C and weighed. Further, PP particles were burned in an air atmosphere at 600°C, and the remaining glass fibers were weighed.

In this manner, the GF concentration and the PP concentration were determined for each distribution flow exit in the discharge pipe groups A and B. In this test, a coefficient of variation CV-value was used as an indicator of the uniform distribution property of the dispersing liquid concentrations. The CV-value represents in % a value obtained by dividing a standard deviation value of the weight concentration in the foamed liquid of reinforcing fiber or thermoplastic resin flowing out from each distributed flow exit by the average concentration thereof. A large CV-value indicates a low uniform distribution.

The results are shown in Table 1. The concentration distribution was slightly superior in the discharge pipe group A to the discharge pipe group B, although the difference was slight.

**Table 1**

| | Manifold Shape | Discharge Pipe Group | CV-value | |
|---|---|---|---|---|
| | | | GF (%) | PP (%) |
| Example 1-1 | Fig. 3 | A | 1.08 | 0.78 |
| | Fig. 3 | B | 1.40 | 1.10 |
| Example 1-2 | Fig. 4 | A | 0.63 | 1.01 |
| | Fig. 4 | B | 1.30 | 1.10 |
| Example 1-3 | Fig. 4 | A | 0.81 | 1.02 |
| | Fig. 4 | B | 3.22 | 2.86 |
| Comparative Example 1 | Fig. 11 | | 1.87 | 4.70 |

### [Example 1-2]

The dispersing liquid was sampled in the same manner as in Example 1-1, using a manifold 20 having the shape of a vertical axis rotor as shown in Fig. 4 and setting the circumferential speed of the turbine-type stirring blade at 2.6 m/s. The degassing ports 28 were released immediately after sampling: the dispersing liquid flowed out immediately after releasing as in Example 1-1.

The results are shown in Table 1. The concentration distribution was slightly superior in the discharge pipe group A to the discharge pipe group B, although the difference was slight.

### [Example 1-3]

The dispersing liquid was sampled in the same manner as in Example 1-2, using a manifold having the shape of a vertical axis rotor as shown in Fig. 4 and by setting the circumferential speed of the turbine-type stirring blade at 1.3 m/s.

When using the discharge pipe group A, the dispersing liquid immediately flowed out even when releasing the degassing ports 28 immediately after sampling. When using the discharge pipe group B, in contrast, foam in a state close to a gas was discharged first after releasing of the degassing ports immediately after sampling, and then the foamed liquid was discharged. This fact suggests that a foam retaining region was formed in the manifold 20.

The results are shown in Table 1. The GF concentration distribution is far superior in the discharge pipe group A compared to the discharge pipe group B. In this Example, a foam retaining region occurred when using the discharge pipe group B, and reinforcing fibers entrapped therein flowed out irregularly from the distribution flow exits, and this is considered to have caused fluctuations of the solid concentration.

### [Comparative Example 1]

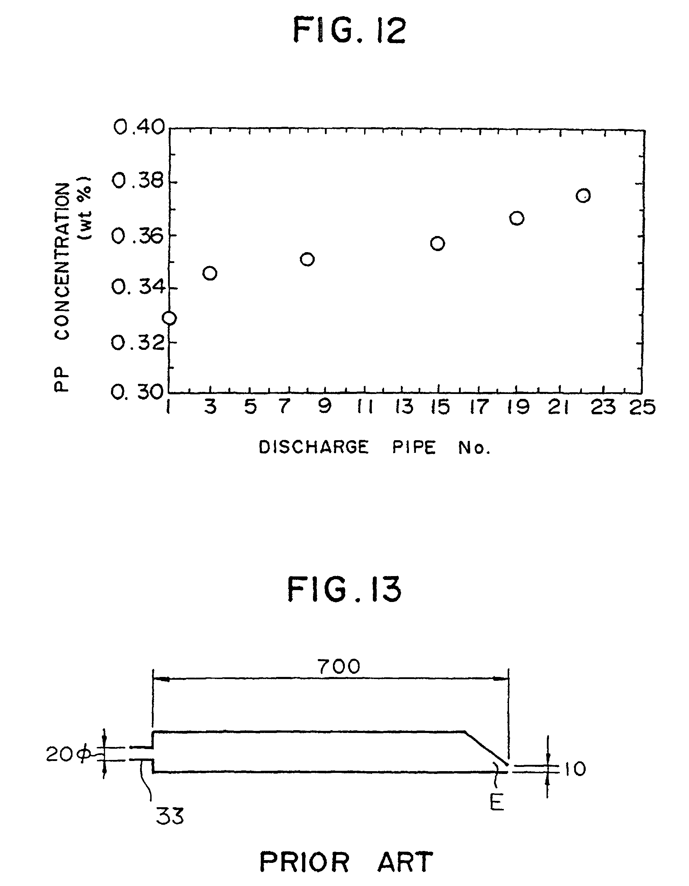

For comparison purposes, sampling of a dispersing liquid was conducted in the same manner as in Example 1-1 with the use of a taper-type manifold having dimensions as shown in Fig. 11. The results are shown in Table 1: these results suggest that the CV-value of the PP concentration is large. Further, Fig. 12 gives values of the PP concentration in the dispersing liquid for each distributed flow exit which was sampled. As is clear from Fig. 12 PP particles are thrown away to the circulation flow exit in the taper-type manifold.

### [Apparatus 2]

Inlets used in the experiment were as follows:

### Conventional inlet 1:

As schematically illustrated in Fig. 13, this inlet had a height of 64 mm, a length of 700 mm, and a width of 1,500 mm, and the upper surface of the tip portion was reduced with a downward inclination towards the discharge exit of the dispersing liquid. Hoses from the distribution supply pipes 9 of the manifold were connected to 24 nozzles 33 having an inside diameter of 20 mm, arranged at equal intervals on the back thereof. The discharge exit for the dispersing liquid onto the mesh belt was in the form of a slit-shaped opening having a height of 10 mm.

### Buffer-type inlet 1:

As schematically shown in Fig. 5, the inlet was in the form of a box having a height of 100 mm, a length of 100 mm and a width of 1,500 mm, and hoses from the distribution supply pipes 9 of the manifold were connected to 24 nozzles 33 having an inside diameter of 20 mm, arranged at equal intervals on the upper surface thereof. The discharge exit for the dispersing liquid onto the mesh belt was in the form of a slit-shaped opening having a height of 10 mm.

### Buffer-type inlet 2:

As schematically illustrated in Fig. 6, the inlet was in the form of a box having a height of 250 mm, a length of 200 mm and a width of 1,500 mm, and a weir 31A having a height of 150 mm was installed so as to extend vertically from the center of the bottom surface. Hoses from the distribution supply pipes 9 of the manifold were connected to 6 elbow-shaped nozzles 33 having an inside diameter of 20 mm, arranged at equal intervals on the back thereof. The exit opening 33A of each nozzle 33 was opposed to the inlet bottom and spaced therefrom by a distance of 50 mm. The discharge exit of the dispersing liquid onto the mesh belt was in the form of a slit-shaped opening having a height of 10 mm.

### Buffer-type inlet 3:

Fig. 7A represents a side view, and Fig. 7B schematically shows a top view. The inlet was in the form of a box having a height of 65 mm, a width of 1,500 mm and a total length of 700 mm. Upstream it was divided into 24 parallel channels 32 by means of 23 partitions 31 having a length of 400 mm at equal intervals over the entire width. Upstream of these channels 32, hoses from the distribution supply pipes 9 of the manifold were connected to elbow-shaped nozzles 33 having an inside diameter of 20 mm which were attached to the upper surface so that their centres were in registry with the center lines of the channels 32. The exit opening 33A of each nozzle 33 was opposed to the rear wall surface 30A of the inlet 30 by a distance of 50 mm.

Two sliced plates 36 and 37 were installed within combining section 35 having a gap of 100 mm in between, beyond the free ends of the partitions 31. Each of the sliced plates 36 and 37 was formed with a vertically slidable plate having a backward inclination of 45° backward. The first sliced plate 36 was installed at a position where there was a distance of 100 mm between the leading end thereof (lower end) and the free end of the partitions 31 when the opening was zero and the second sliced plate 37 was installed at a position where there was a distance of 300 mm from the free end of the partitions 31. The opening of each of the sliced plates 36 and 37 was adjustable.

### [Example 2-1]

### o Conditions for the preparation of the dispersing liquid:

A foamed aqueous solution was prepared in a dispersing tank 1. Glass fibers having a diameter of 11 µm and an average length of 13 mm in an amount of 0.4 wt.% and granular polypropylene having an average particle size of 0.9 mm in an amount of 0.6 wt.% were added, stirred and dispersed to prepare a dispersing liquid C.

### o Sheet-making conditions:

The dispersing liquid C sent at a flow rate of 1,440 L/min was distributed by the taper-type manifold 20 shown in Fig. 11 into distribution supply pipes 9, and supplied through the buffer-type inlet shown in Fig. 5 onto the mesh belt 11 moving at a speed of 5.0 m/min (mesh opening: 200 µm, effective sheet-making width: 1,500 mm), thereby accomplishing sheet-making of a web W with a target unit weight distribution of 1,500 g/m².

### o Test results:

The resultant web W was divided into 30 parts in the width direction after drying, and the unit weight value (CV value) of each piece was measured. The coefficient of variation CV-value was adopted as an indicator of the unit weight distribution as in Example 1. The results of the test are shown in Table 2.

**Table 2**

| | Manifold Shape | Inlet Shape | Dispersing liquid staying depth | CV-value of unit weight in width direction (%) |
|---|---|---|---|---|
| Example 2-1 | Fig. 11 | Fig. 5 | 30 mm | 4.5 |
| Example 2-2 | Fig. 11 | Fig. 6 | 30 mm | 3.1 |
| Example 2-3 | Fig. 11 | Fig. 7 a, b | 30 mm | 2.3 |
| Example 2-4 | Fig. 11 | Fig. 7 a, b | 30 mm | 2.1 |
| Example 2-5 | Fig. 11 | Fig. 7 c | 30 mm | 2.0 |
| Comparative Example 2 | Fig. 11 | Fig. 13 | 30 mm | 6.5 |
| Example 3 | Fig. 11 | Fig. 13 | 200 mm | 2.5 |

### [Example 2-2]

Sheet-making and evaluation of the web were conducted using the buffer-type inlet shown in Fig. 6, under the same conditions as in Example 2-1. The results are shown in Table 2.

### [Example 2-3]

Sheet-making and evaluation of the web W were conducted, using the buffer-type inlet shown in Figs. 7A and 7B, under the same conditions as in Example 2-1. The leading end of the first sliced plate 36 was raised so as to avoid contact with the surface of the dispersing liquid C. The second sliced plate had an opening of 10 mm. The results are shown in Table 2.

### [Example 2-4]

Sheet-making and evaluation of the web W were conducted, using the buffer-type inlet shown in Figs. 7A and 7B, under the same conditions as in Example 2-1. In this Example, the first sliced plate had an opening of 15 mm, and the second sliced plate had an opening of 10 mm. The results are shown in Table 2.

### [Example 2-5]

As shown in the top view of Fig. 7C, an experiment was carried out by inserting width reducing plates 39 into the outermost channels of the buffer-type inlet. In each channel the width reducing plates 39 were inserted so as to contact the inlet side wall 38 and the inner face of the partition 31 adjacent thereto so that the channel sectional area after insertion becomes 80% of that before insertion. The free end of each width reducing plate 39 was made thinner toward the tip so that the occurrence of a fan-shaped flow, as a consequence of the difference in thickness at the channel exit as compared with the partition 31, was not promoted.

Sheet-making and evaluation of the web W were conducted, with the opening of the first sliced plate 36 of the inlet set at 16 mm and the opening of the second sliced plate set at 10 mm, and under the same conditions as in Example 2-1. The results are shown in Table 2.

### [Comparative Example 2]

Sheet-making and evaluation of the web W were conducted, by using the conventional inlet shown in Fig. 13, under the same conditions as in Example 2-1. The results are shown also in Table 2.

### [Apparatus 3]

A side view of the reservoir-type headbox used in Example 3 is schematically illustrated in Fig. 8A. The holding section 15 of the headbox had substantially the same width as the mesh belt 11 and was located directly thereabove. The upper surface thereof formed a downward slant from the rear towards the leading end. This holding section 15 had a large height, and kept the dispersing liquid at a prescribed depth on the mesh belt 11 to ensure holding thereof. In this Example, the headbox had a height of 300 mm.

### [Example 3]

Sheet-making of web W was performed using the taper-type manifold shown in Fig. 11, the conventional inlet shown in Fig. 13 and the reservoir-type headbox 13, under the same conditions as in Example 2-1. The holding depth of the dispersing liquid on the mesh belt was 200 mm. The resultant web was divided into 30 pieces in the width direction after drying, and the unit weight value was measured for each piece to determine the coefficient of variation CV-value. The results are shown in Table 2.

### [Example 4]

Sheet-making of a further web having uniform unit weight distribution in the width direction was carried out by using the combination of the manifold having the shape of a vertical axis rotor, the buffer-type inlet and the reservoir-type headbox of the present invention.

### [Example 4-1]

Sheet-making of a web W was conducted under the same conditions as in Example 2-2, by using a manifold having the shape of a vertical axis rotor, provided with 24 distribution flow exits arranged at equal intervals on concentric circles on the upper surface thereof, with a solid distributing performance equal to that of the manifold shown in Fig. 4, and the buffer-type inlet shown in Fig. 6. The resultant web was dried, and then divided into 30 pieces in the width direction. The unit weight value was measured for each piece to determine the coefficient of variation CV-value. The results are shown in Table 3.

**Table 3**

| | Manifold Shape | Inlet Shape | Dispersing liquid staying depth | CV-value of unit weight in width direction (%) |
|---|---|---|---|---|
| Example 4-1 | cylindrical | Fig. 6 | 30 mm | 2.2 |
| Example 4-2 | cylindrical | Fig. 7A, B | 30 mm | 1.2 |
| Example 4-3 | cylindrical | Fig. 8B, C | 200 mm | 0.9 |

### [Example 4-2]

Sheet-making of a web W was carried out under the same conditions as in Example 2-4 using the manifold having the shape of a vertical axis rotor as in Example 4-1, and the buffer-type inlet shown in Figs. 7A and 7B. The resultant web was dried, and then divided into 30 pieces in the width direction. The unit weight value was measured for each piece to determine the coefficient of variation CV-value. The results are shown in Table 3.

### [Example 4-3]

Sheet-making of a web W was conducted under the same conditions as in Example 3 using the manifold having the shape of a vertical axis rotor as in Example 4-1, the buffer-type inlet of which the side view and the back view are illustrated in Figs. 8A and 8B, respectively, and the reservoir-type headbox.

This Example is characterized in that an inlet having a performance equivalent to that of the buffer-type inlet shown in Figs. 7A and 7B was longitudinally installed to the reservoir-type headbox. More specifically, this longitudinally arranged buffer-type inlet was integrally formed by means of an inlet partition 30B on the rear side in the line direction of the holding section 15 of the reservoir-type headbox 13, and the dispersing liquid inlet ports opened toward a dispersing liquid hitting face 30A located on the bottom of the inlet. The dispersing liquid C collided with the dispersing liquid hitting face 30A, changed its direction, went up in a first section bounded by vertical partitions 31 as an ascending flow, met together in the combining section 35 above the partitions 31, and overflowed from discharge exit E at the top of the inlet partition 30B into the holding section 15. In this case, the sliced plate 36 comprised a horizontal plate arranged so as to cover the overflow exit E from above, and rectified the flows into a stable flow by inhibiting movement of the liquid surface of the dispersing liquid C overflowing from the overflow exit E by contacting the liquid surface.

The resultant web was dried, and then divided into 30 pieces in the width direction. The unit weight value was measured for each piece to determine the coefficient of variation CV-value. The results are shown in Table 3.

## Claims

1. An apparatus for manufacturing a fiber reinforced thermoplastic resin sheet comprising:
(a) a dispersion supply container (1) comprising container means (3) for containing a dispersing liquid comprising a reinforcing fiber and a resin;
(b) a manifold (20) connected to said dispersion supply container, said manifold including a shell (2b) having a substantially central axis wherein said shell is substantially symmetrically shaped around said axis and having;
(c) a dispersing liquid inlet (21) and a plurality of dispersing liquid outlets (25), which outlets are symmetrically positioned about said shell axis, wherein said manifold is such that the dispersing liquid introduced into said manifold through said inlet (21) is substantially spirally and/or vertically circulated within said shell (26) prior to exiting through said outlets (25); and
(d) a distributor (13) connected to said manifold to receive dispersing liquid from said outlets (25) to distribute said dispersing liquid to make a fiber reinforced thermoplastic resin sheet, **characterised in that** said outlets (25) are located in the upper portion of the manifold (20).

2. The apparatus of claim 1, wherein said distributor has an inlet (30) provided with a flow buffer in the flow path of the dispersing liquid received from said outlets (25), said flow buffer having a wall surface (30A) with which said dispersing liquid is caused to collide.

3. The apparatus of claim 1 or 2, wherein said distributor comprises a reservoir-type headbox (13) having a structure capable of dispensing said dispersing liquid to at least a prescribed depth on a moving endless mesh belt (11).

4. The apparatus of claim 1, 2 or 3 wherein said shell (26) is substantially cylindrically shaped.

5. The apparatus of claim 4, wherein said manifold (20) has a ratio of height to diameter of about 0.3 to 3.0.

6. The apparatus of any preceding claim, wherein said outlets (25) have substantially equal diameters and are located at substantially equal heights on said shell (26).

7. The apparatus of any preceding claim, wherein said inlet (21) is positioned to introduce said dispersing liquid in a direction tangential to said shell (26).

8. The apparatus of any one of claims 1 to 6, wherein said inlet (21) is positioned to introduce said dispersing liquid along the central axis.

9. The apparatus of claim 8, wherein said manifold (20) further comprises a stirrer (24a) rotating about the central axis.

10. The apparatus of any preceding claim, wherein said outlets (25) are arranged at equal intervals on substantially one concentric circle around the center axis.

11. The apparatus of claim 10, wherein said outlets (25) exit vertically upward from said manifold (20).

12. The apparatus as claimed in any preceding claim and further comprising:
(a) a movable endless mesh belt (11) to receive said substantially uniformly distributed dispersion liquid, and
(b) a suction filtration region (10) to filter the dispersion liquid on the belt to form said sheet.

13. The apparatus of claim 12 when appendant to claim 2 or to any claim appendant to claim 2, wherein said distributor inlet (30) has a discharge exit (E) having the same width as the suction filtration region (10).

14. The apparatus of claim 13, wherein said distributor inlet (30) further comprises a plate (36) (37) slidably extending into said flow path to form an adjustable slit-shaped opening constituting said discharge exit (E)

15. The apparatus of claim 13, wherein said distributor inlet (30) is provided with a plurality of plates (36, 37) extending into said flow path at intervals in the flow direction of said dispersing liquid.

16. The apparatus of any one of claims 13 to 15, wherein the interior of said distributor inlet (30) is divided into a plurality of sections (32) each receiving said dispersing liquid and wherein the resultant flows of the dispersing liquid are combined after leaving the sections and before leaving the distributor inlet.

17. The apparatus of claim 16, wherein the outermost ones of said sections (32) have a cross-sectional area smaller than that of other of said sections.

18. The apparatus of claim 3 or of any claim appendant thereto, wherein said predetermined depth is a depth at which rolling caused by the dispersing liquid flowing into the headbox (13) does not reach above said mesh belt (11).

19. The apparatus of claim 18, wherein said reservoir headbox (13) is divided into a first section and a holding section (15) by a substantially vertically oriented divider (30B), said first section being divided by partitions (31) into a plurality of receiving sections connected to said manifold (20), whereby dispersing liquid enters lower portions of said receiving sections, travels upwardly to an upper portion of said divider, mixes together and flows beyond said divider and into said holding section.

20. The apparatus of claim 19 further comprising a plate (36) positioned at an upper portion of said first section to adjust the flow of dispersing liquid into said holding section (15).

## Patentansprüche

1. Vorrichtung zur Herstellung von faserverstärkten thermoplastischen Harzplatten, aufweisend:
(a) einen Dispersionsaufgabebehälter (1) aufweisend Behältermittel (3) zum Halten einer Dispergierungsflüssigkeit, welche eine Verstärkungsfaser und ein Harz enthält;
(b) eine mit dem Dispersionsaufgabebehälter verbundene Verzweigungseinrichtung (20), welche ein Gehäuse (26) mit einer im Wesentlichen zentralen Achse aufweist, wobei das Gehäuse im Wesentlichen symmetrisch um die Achse ausgebildet ist und
(c) einen Dispergierungsflüssigkeitseinlass (21) und eine Anzahl an Dispergierungsflüssigkeitsauslässen (25) aufweist, welche Auslässe symmetrisch um die Gehäuseachse positioniert sind, wobei die Verzweigungseinrichtung so ausgelegt ist, dass die Dispergierungsflüssigkeit, die durch den Einlass (21) in die Verzweigungseinrichtung eingeleitet wird, im Wesentlichen spiralförmig und/oder vertikal innerhalb des Gehäuses (26) umgewälzt wird, bevor sie aus dem Auslass (25) austritt; und
(d) einen Verteiler (13), der mit der Verzweigungseinrichtung verbunden ist, um Dispergierungsflüssigkeit von den Auslässen (25) zu erhalten, um die Dispergierungsflüssigkeit zu verteilen, um faserverstärkte thermoplastische Harzplatten zu erzeugen,
**dadurch gekennzeichnet, dass** die Auslässe (25) sich im oberen Bereich der Verzweigungseinrichtung (20) befinden.

2. Vorrichtung nach Anspruch 1, **dadurch gekennzeichnet, dass** der Verteiler einen Einlass (30) aufweist, der mit einem Strömungspuffer im Strömungsweg der von den Auslässen (25) empfangenen Dispergierungsflüssigkeit vorhanden ist, wobei der Strömungspuffer eine Wandoberfläche (30A) aufweist, gegen die die Dispergierungsflüssigkeit zum Aufprall gebracht wird.

3. Vorrichtung nach Anspruch 1 oder 2, **dadurch gekennzeichnet, dass** der Verteiler einen behälterartigen Auflaufkasten (13) umfasst, der eine Struktur zur Abgabe der Dispergierungsflüssigkeit auf mindestens einer vorgegebenen Tiefe auf einem beweglichen Endlosgurtband (11) aufweist.

4. Vorrichtung nach einem der Ansprüche 1 bis 3, **dadurch gekennzeichnet, dass** das Gehäuse (26) im Wesentlichen zylindrisch geformt ist.

5. Vorrichtung nach Anspruch 4, **dadurch gekennzeichnet, dass** das Verhältnis der Höhe zum Durchmesser der Verzweigungseinrichtung (20) etwa 0,3 bis 3,0 ist.

6. Vorrichtung nach einem der vorstehenden Ansprüche, **dadurch gekennzeichnet, dass** die Auslässe (25) im Wesentlichen gleiche Durchmesser aufweisen und sich bei im Wesentlichen gleichen Höhen auf dem Gehäuse (26) befinden.

7. Vorrichtung nach einem der vorstehenden Ansprüche, **dadurch gekennzeichnet, dass** der Einlass (21) so angeordnet ist, dass die Dispergierungsflüssigkeit in eine Richtung tangential zum Gehäuse (26) eingeleitet wird.

8. Vorrichtung nach einem der Ansprüche 1 bis 6, **dadurch gekennzeichnet, dass** der Einlass (21) so angeordnet ist, dass die Dispergierungsflüssigkeit entlang der zentralen Achse eingeleitet wird.

9. Vorrichtung nach Anspruch 8, **dadurch gekennzeichnet, dass** die Verzweigungseinheit (20) des weiteren einen Rührer (24a), der um die zentrale Achse rotiert, aufweist.

10. Vorrichtung nach einem der vorstehenden Ansprüche, **dadurch gekennzeichnet, dass** die Auslässe (25) bei gleichen Abständen auf im Wesentlichen einem konzentrischen Kreis um die zentrale Achse angeordnet sind.

11. Vorrichtung nach Anspruch 10, **dadurch gekennzeichnet, dass** die Auslässe (25) vertikal nach oben aus der Verzweigungseinrichtung (20) austreten.

12. Vorrichtung nach einem der vorstehenden Ansprüche, **dadurch gekennzeichnet, dass** sie folgendes aufweist:
(a) ein bewegliches endloses Gurtband (11) zum Aufnehmen der im Wesentlichen einheitlich verteilten Dispergierungsflüssigkeit, und
(b) einen Saugfilterbereich (10) zum Filtern der Dispergierungsflüssigkeit auf dem Band, um die Platte zu bilden.

13. Vorrichtung nach Anspruch 12, soweit rückbezogen auf Anspruch 2 oder auf einen auf Anspruch 2 rückbezogenen Anspruch, **dadurch gekennzeichnet, dass** der Verteilereinlass (30) einen Ablassausgang (E) von derselben Breite wie der Saugfilterbereich (10) aufweist.

14. Vorrichtung nach Anspruch 13, **dadurch gekennzeichnet, dass** der Verteilereinlass (30) eine Platte (36) (37) aufweist, die sich verschiebbar in den Strömungsweg erstreckt, um eine einstellbare schlitzförmige Öffnung zu bilden, die den Ablassausgang (E) darstellt.

15. Vorrichtung nach Anspruch 13, **dadurch gekennzeichnet, dass** der Verteilereinlass (30) mit einer Anzahl an Platten (36, 37) versehen ist, die sich in Abständen in der Strömungsrichtung der Dispergierungsflüssigkeit in den Strömungsweg erstrecken.

16. Vorrichtung nach einem der Ansprüche 13 bis 15, **dadurch gekennzeichnet, dass** der Innenraum des Verteilereinlasses (30) in eine Anzahl an Abschnitten (32) aufgeteilt ist, von denen jeder die Dispergierungsflüssigkeit aufnimmt, wobei die resultierenden Strömungen der Dispergierungsflüssigkeit nach dem Verlassen der Abschnitte und vor dem Verlassen des Verteilereinlasses vereinigt werden.

17. Vorrichtung nach Anspruch 16, **dadurch gekennzeichnet, dass** die am weitesten aussen gelegenen Abschnitte (32) einen kleineren Querschnittsbereich aufweisen als die anderen Abschnitte.

18. Vorrichtung nach Anspruch 3 oder nach einem darauf rückbezogenen Anspruch, **dadurch gekennzeichnet, dass** die vorgegebene Tiefe eine Tiefe ist, bei der die durch die in den Auflaufkasten (13) strömende Dispergierungsflüssigkeit hervorgerufene Wälzbewegung nicht über das Gurtband (11) reicht.

19. Vorrichtung nach Anspruch 18, **dadurch gekennzeichnet, dass** der Behälter-Auflaufkasten (13) durch eine im Wesentlichen vertikal ausgerichtete Teilungswand (30B) in einen ersten Abschnitt und einen Halteabschnitt (15) geteilt wird, wobei der erste Abschnitt durch Trennwände (31) in eine Anzahl an Aufnahmeabschnitten geteilt wird, die mit der Verzweigungseinheit (20) verbunden sind, wodurch die Verteilerflüssigkeit in die unteren Teile der Aufnahmeabschnitte eintritt, nach oben zu einem oberen Teil der Teilungseinrichtung strömt, sich vermischt und über die Teilungseinrichtung hinaus in den Halteabschnitt strömt.

20. Vorrichtung nach Anspruch 19, **dadurch gekennzeichnet, dass** sie eine Platte (36) aufweist, die an einem oberen Teil des ersten Abschnitts angeordnet ist, um die Strömung der Dispergierungsflüssigkeit in den Halteabschnitt (15) einzustellen.

## Revendications

1. Appareil pour la fabrication de plaques en résine thermoplastique renforcées par des fibres comprenant :
(a) un récipient de fourniture d'une dispersion (1) comprenant des moyens formant récipient (3) destinés à soutenir un liquide dispersant comprenant une fibre. de renforcement et une résine ;
(b) un collecteur (20) relié au dit récipient d'alimentation de dispersion, ledit collecteur comprenant une enveloppe (26) possédant un axe substantiellement central dans lequel ladite enveloppe est substantiellement de forme symétrique autour dudit axe et possédant ;
(c) un orifice d'entrée de liquide dispersant (21) et une pluralité d'orifices de sortie de liquide dispersant (25), lesquels orifices de sortie sont placés de manière symétrique autour dudit axe de l'enveloppe, dans lequel ledit collecteur est tel que le liquide dispersant introduit dans ledit collecteur à travers ledit orifice d'entrée (21) est substantiellement en circulation spirale et/ou verticale à l'intérieur de ladite enveloppe (26) avant de sortir à travers lesdits orifices de sortie (25) ; et
(d) un distributeur (13) relié au dit collecteur pour recevoir un liquide dispersant depuis lesdits orifices de sortie (25) afin de diffuser ledit liquide dispersant pour former une plaque en résine thermoplastique renforcée, **caractérisé en ce que** lesdits orifices de sortie (25) sont situés dans la partie supérieure du collecteur (20).

2. Appareil selon la revendication 1, dans lequel ledit diffuseur possède un orifice d'entrée (30) comportant un amortisseur d'écoulement sur le parcours du liquide dispersant reçu à partir desdits orifices de sortie (25), ledit amortisseur d'écoulement possédant une surface de paroi (30A) avec laquelle on fait entrer en collision ledit liquide dispersant.

3. Appareil selon la revendication 1 ou 2, dans lequel ledit diffuseur comprend une bâche d'alimentation de type réservoir (13) possédant une structure capable de distribuer ledit liquide dispersant à au moins une profondeur prescrite sur une courroie engrenée sans fin (11).

4. Appareil selon la revendication 1, 2 ou 3, dans lequel ladite enveloppe (26) est substantiellement de forme cylindrique.

5. Appareil selon la revendication 4, dans lequel ledit collecteur (20) possède un rapport de hauteur sur diamètre d'environ 0,3 à 3,0.

6. Appareil selon l'une quelconque des revendications précédentes, dans lequel lesdits orifices de sortie (25) possèdent substantiellement des diamètres égaux et sont situés à des hauteurs substantiellement égales sur ladite enveloppe (26).

7. Appareil selon l'une quelconque des revendications précédentes, dans lequel ledit orifice d'entrée (21) est placé pour introduire ledit liquide dispersant dans une direction tangentielle à ladite enveloppe (26).

8. Appareil selon l'une quelconque des revendications 1 à 6, dans lequel ledit orifice d'entrée (21) est placé pour introduire ledit liquide dispersant le long de l'axe central.

9. Appareil selon la revendication 8, dans lequel ledit collecteur (20) comprend en outre un agitateur (24a) tournant autour de l'axe central.

10. Appareil selon l'une quelconque des revendications précédentes, dans lequel lesdits orifices de sortie (25) sont agencés à intervalles égaux sur un cercle substantiellement concentrique autour de l'axe central.

11. Appareil selon la revendication 10, dans lequel lesdits orifices de sortie (25) sortent verticalement vers le haut depuis ledit collecteur (20).

12. Appareil selon l'une quelconque des revendications précédentes et comprenant en outre :
(a) une courroie sans fin (11) à engrènement destinée à recevoir ledit liquide dispersant distribué de manière uniforme, et
(b) une région de filtration par aspiration (10) destinée à filtrer le liquide dispersant sur la courroie afin de former ladite plaque.

13. Appareil selon la revendication 12 lorsque annexé à la revendication 2 ou à une quelconque revendication annexée à la revendication 2, dans laquelle ledit orifice d'entrée du distributeur (30) possède une sortie de refoulement (E) ayant la même largeur que la région de filtration par aspiration (10).

14. Appareil selon la revendication 13, dans lequel ledit orifice d'entrée du distributeur (30) comprend en outre une plaque (36) (37) s'étendant de manière coulissante sur ledit parcours d'écoulement afin de former une ouverture ajustable en forme de fente constituant ladite sortie de refoulement (E).

15. Appareil selon la revendication 13, dans lequel ledit orifice d'entrée du distributeur (30) est proposé avec une pluralité de plaques (36, 37) s'étendant sur ledit parcours d'écoulement à des intervalles dans la direction de l'écoulement dudit liquide dispersant.

16. Appareil selon l'une quelconque des revendications 13 à 15, dans lequel l'intérieur dudit orifice d'entrée du distributeur (30) est divisé en une pluralité de sections (32) recevant chacune ledit liquide dispersant et dans lequel les écoulements résultants du liquide dispersant sont combinés après avoir quitté les sections et avant d'avoir quitté l'orifice d'entrée du distributeur.

17. Appareil selon la revendication 16, dans lequel les sections les plus éloignées desdites sections (32) ont une aire en coupe transversale plus petite que celle des autres dites sections.

18. Appareil selon la revendication 3 ou une quelconque des revendications annexée à celle-ci, dans lequel ladite profondeur prédéterminée est une profondeur à laquelle le déroulement tournant provoqué par le liquide dispersant s'écoulant dans la bâche d'alimentation (13) n'atteint pas le dessus de ladite courroie à engrènement (11).

19. Appareil selon la revendication 18, dans lequel ladite bâche d'alimentation de type réservoir (13) est divisée en une première section et une section de retenue (15) par un séparateur orienté de manière substantiellement verticale (30B), ladite première section étant divisée par des cloisons (31) en une pluralité de sections de réception reliées au dit collecteur (20), moyennant quoi le liquide dispersant entre dans les parties inférieures desdites sections de réception, s'achemine vers le haut vers une partie supérieure dudit séparateur, se mélange et s'écoule au-delà dudit séparateur et dans ladite section de retenue.

20. Appareil selon la revendication 19, comprenant en outre une plaque (36) placée au niveau d'une partie supérieure de ladite première section afin d'ajuster l'écoulement du liquide dispersant à l'intérieur de ladite section de retenue (15).
